# EUROPÄISCHE PATENTANMELDUNG

(11) **EP 4 350 467 A1**
(43) Veröffentlichungstag der Anmeldung: **10.04.2024**
(21) Anmeldenummer: 23191166.0
(22) Anmeldetag: 11.08.2023
(51) Int. Cl.: G05D 23/19

(54) **KONTROLLVERFAHREN, KONTROLLSYSTEM, COMPUTERPROGRAMMPRODUKT UND COMPUTERLESBARES MEDIUM**

(30) Priorität: 07.10.2022 DE 102022126018
(71) Anmelder: E.ON SE, 45131 Essen (DE)
(72) Erfinder: van der Mond, Oliver, 45133 Essen (DE); Geldmacher, Dr. Jan, 44227 Dortmund (DE); Reinelt, Dr. Jens, 44797 Bochum (DE)
(74) Vertreter: Bals & Vogel Patentanwälte PartGmbB

(57) **Zusammenfassung**

Die Erfindung betrifft ein Kontrollverfahren (200) zum Kontrollieren (206) einer Heizvorrichtung (100) für ein Bauwerk (170) durch ein Kontrollsystem (10), das Kontrollverfahren (200) umfassend:
- Ermitteln (202) zumindest eines Widerstandwerts (112) einer Außentemperaturvorrichtung (110) der Heizvorrichtung (100) durch eine Ermittlungsvorrichtung (20) des Kontrollsystems (10),
- Kontrollieren (206) der Heizvorrichtung (100) durch eine Kontrollvorrichtung (40) des Kontrollsystems (10), wobei das Kontrollieren (206) durch Anpassen des zumindest einen Widerstandwerts (112) um zumindest einen Offset-Wert (114) durch die Kontrollvorrichtung (40) erfolgt.

Ferner betrifft die Erfindung ein Kontrollsystem (10) zum Kontrollieren (206) einer Heizvorrichtung (100) für ein Bauwerk (170), ein Computerprogrammprodukt (300) sowie ein computerlesbares Medium (400).

## Beschreibung

Die vorliegende Erfindung betrifft ein Kontrollverfahren zum Kontrollieren einer Heizvorrichtung für ein Bauwerk durch ein Kontrollsystem. Ferner betrifft die Erfindung ein Kontrollsystem zum Kontrollieren einer Heizvorrichtung für ein Bauwerk. Auch betrifft die Erfindung ein Computerprogrammprodukt zum Kontrollieren einer Heizvorrichtung für ein Bauwerk durch das Kontrollsystem sowie ein computerlesbares Medium.

Die derzeitig öffentlich bekannten Heizvorrichtungen für Bauwerke im Stand der Technik weisen zumeist eine Außentemperaturvorrichtung zur Erfassung einer Außentemperatur auf. Für die Messung der Außentemperatur sind verschiedene Arten von Temperatursensoren je nach Hersteller und Anlagentyp bekannt. Basierend auf der Außentemperatur wird zumeist ein fix an der Heizvorrichtung eingestelltes Profil in Form einer Heizkurve abgefahren. Diese Heizkurve gibt zumeist an, welche Vorlauftemperatur in Abhängigkeit von der Außentemperatur an der Anlage gefahren wird. Eingestellt wird diese Heizkurve in der Regel nur einmalig bei der Installation der Heizvorrichtung. Hierbei werden Annahmen getroffen, die im weiteren zeitlichen Verlauf der Heizvorrichtung und/oder des Bauwerks jedoch nicht oder nur selten validiert werden.

Es ist daher Aufgabe der vorliegenden Erfindung, die oben beschriebenen Nachteile im Stand der Technik beim Kontrollieren einer Heizvorrichtung für ein Bauwerk zu beheben oder zumindest teilweise zu beheben. Insbesondere ist es Aufgabe der Erfindung, ein Kontrollverfahren bereitzustellen, mit dem ein Kontrollieren einer Heizvorrichtung für ein Bauwerk durch ein Kontrollsystem besonders einfach ermöglicht wird, insbesondere welches einen effizienteren Betrieb der Heizvorrichtung ermöglicht. Insbesondere ist es ferner die Aufgabe der Erfindung, ein Kontrollsystem zum Kontrollieren einer Heizvorrichtung für ein Bauwerk, ein Computerprogrammprodukt zum Kontrollieren einer Heizvorrichtung für ein Bauwerk durch das Kontrollsystem sowie ein computerlesbares Medium bereitzustellen.

Die voranstehende Aufgabe wird durch die Patentansprüche gelöst. Insbesondere wird die Aufgabe gelöst durch ein Kontrollverfahren mit den Merkmalen des unabhängigen Anspruchs 1. Ferner wird die Aufgabe gelöst durch ein Kontrollsystem mit den Merkmalen des unabhängigen Anspruchs 11, durch ein Computerprogrammprodukt mit den Merkmalen des unabhängigen Anspruchs 12 und durch ein computerlesbares Medium mit den Merkmalen des unabhängigen Anspruchs 13. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Kontrollverfahren beschrieben sind, selbstverständlich auch im Zusammenhang mit dem erfindungsgemäßen Kontrollsystem, dem erfindungsgemäßen Computerprogrammprodukt, dem erfindungsgemäßen computerlesbaren Medium und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Kontrollverfahren zum Kontrollieren einer Heizvorrichtung für ein Bauwerk durch ein Kontrollsystem. Das Kontrollverfahren umfasst:
- Ermitteln zumindest eines Widerstandwerts einer Außentemperaturvorrichtung der Heizvorrichtung durch eine Ermittlungsvorrichtung des Kontrollsystems,
- Kontrollieren der Heizvorrichtung durch eine Kontrollvorrichtung des Kontrollsystems, wobei das Kontrollieren durch Anpassen des zumindest einen Widerstandwerts um zumindest einen Offset-Wert durch die Kontrollvorrichtung erfolgt.

Die zuvor und die im Nachfolgenden beschrieben Verfahrensschritte können, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung. Eine bevorzugte Reihenfolge der Verfahrensschritte sieht vor, dass die Verfahrensschritte in der aufgeführten Reihenfolge ausgeführt werden.

Die Heizvorrichtung ist im Rahmen der Erfindung bevorzugt als Bauwerksheizung zu verstehen und insbesondere zur Wärmeversorgung eines Bauwerks ausgestaltet. Die Heizvorrichtung ist beispielhaft als Gas- und/oder Ölheizung ausgestaltet. Eine Heizvorrichtung ist im Rahmen der Erfindung als Vorrichtung zur Erzeugung von Wärme, insbesondere aus einer Energiequelle, bevorzugt auf einem Brennstoff, zu verstehen. Gegenteilig ist eine Heizvorrichtung im Rahmen der Erfindung bevorzugt nicht als Vorrichtung zum Wärmetausch, beispielsweise gemäß einem Heizkörper, zu verstehen. Als Bauwerk ist bevorzugt eine bautechnische Vorrichtung, eine Immobilie, eine Liegenschaft, ein Gebäude, eine Vielzahl an Räumen und/oder eine Halle zu verstehen. Erfindungsgemäß sind das Kontrollsystem und das Kontrollverfahren besonders vorteilhaft zur Nachrüstung von Bestandsheizungen verwendbar. Ein bevorzugtes Ziel der Erfindung ist es, für möglichst viele Heizvorrichtungen einen verbesserten, effizienteren und/oder günstigeren Betrieb und somit bevorzugt einen verringerten Energieeinsatz zu ermöglichen. Das Kontrollsystem wird zum Kontrollieren der Heizvorrichtung bevorzugt an der Heizvorrichtung installiert und/oder befestigt, um die Verfahrensschritte des Kontrollverfahrens auszuführen. Bevorzugt wird die Kontrollvorrichtung an und/oder in eine Leitung der Außentemperaturvorrichtung der Heizvorrichtung angeschlossen und/oder zwischengeschaltet.

Wie in der Einleitung beschrieben heizen bekannte Heizvorrichtungen zumeist in Abhängigkeit von einem gemessenen Widerstandswert einer Außentemperaturvorrichtung. Das erfindungsgemäße Kontrollverfahren sieht vor, dass zumindest ein Widerstandwerts einer Außentemperaturvorrichtung der Heizvorrichtung durch eine Ermittlungsvorrichtung des Kontrollsystems ermittelt wird. Das Ermitteln des zumindest einen Widerstandwerts erfolgt bevorzugt als Strom- und/oder Spannungsmessung durch die Ermittlungsvorrichtung. Bevorzugt wird eine Vielzahl an Widerstandswerten, insbesondere über die Zeit ermittelt. Das Betriebsverhalten der Heizvorrichtung ist daraufhin durch das Kontrollverfahren kontrollierbar, indem ein Anpassen des zumindest einen Widerstandwerts um zumindest einen Offset-Wert durch die Kontrollvorrichtung erfolgt.

Anschaulich formuliert, wird durch die Kontrollvorrichtung und durch das Anpassen des zumindest einen Widerstandwerts um zumindest einen Offset-Wert der Heizvorrichtung eine veränderte Außentemperatur simuliert und somit die Heizvorrichtung kontrolliert.

Im Rahmen der Erfindung ist das Kontrollieren bevorzugt als Steuern und/oder Regeln der Heizvorrichtung durch die Kontrollvorrichtung zu verstehen. Die Kontrollvorrichtung ist bevorzugt als zumindest abschnittsweise elektrische Schaltung ausgestaltet. Bevorzugt umfasst das Kontrollsystem, insbesondere die Kontrollvorrichtung eine Logik- und/oder Rechnervorrichtung zur Steuerung und/oder Regelung des Kontrollsystems. Der zumindest eine Offset-Wert, um den der zumindest einen Widerstandwert durch die Kontrollvorrichtung angepasst wird, ist positiv oder negativ ausgestaltet. Bevorzugt ist die Kontrollvorrichtung ausgestaltet, eine Vielzahl an Widerstandswerten mit Offset-Werten anzupassen. Bevorzugt ist die Kontrollvorrichtung ausgestaltet, unterschiedliche Widerstandswerte mit unterschiedlichen Offset-Werten anzupassen. Anschaulich beschrieben ermöglicht das erfindungsgemäße Verfahren somit eine Anpassung, insbesondere eine variable und/oder dynamische Anpassung, des Betriebsverhaltens der Heizvorrichtung durch das Kontrollsystem.

Bevorzugt ermöglicht das Kontrollverfahren durch das Anpassen des zumindest einen Widerstandwerts um zumindest einen Offset-Wert durch die Kontrollvorrichtung ein möglichst optimales Verhalten der Heizung zur Minimierung des Energieeinsatzes bei Beibehaltung der benötigten Wärmeproduktion.

Durch das Anpassen des zumindest einen Widerstandwerts um zumindest einen Offset-Wert durch die Kontrollvorrichtung ist die Heizungsvorrichtung kontrollierbar und beispielsweise in einen anderen, insbesondere verbesserten, optimaleren und/oder energieeffizienteren Temperaturbereich kontrollierbar.

Darüber hinaus ist es durch das erfindungsgemäße Kontrollverfahren bevorzugt möglich, die Heizvorrichtung mittels entsprechender Offset-Werte zeitvariant zu betreiben und/oder mit einer Nachtabsenkung/-Abschaltung auszustatten, insbesondere auch wenn die eigentliche Regelung der Heizvorrichtung ein solches Programm und/oder einen solchen Betrieb nicht vorsieht.

Ein derart ausgestaltetes Kontrollverfahren ist besonders vorteilhaft, da das Kontrollieren einer Heizvorrichtung für ein Bauwerk durch das Kontrollsystem besonders einfach ermöglicht wird. Bevorzugt ermöglicht das Kontrollverfahren eine dynamische Anpassung der Heizvorrichtung an veränderte Bedingungen der Heizvorrichtung und/oder des Bauwerks. Das erfindungsgemäße Kontrollverfahren ermöglicht bevorzugt eine Bereitstellung der ermittelten Informationen zum Betrieb der Heizvorrichtung und/oder des angepassten zumindest einen Widerstandwerts, eine manuelle Steuerung und/oder eine zumindest teilweise automatische Regelung der Heizvorrichtung durch das Kontrollsystem.

Gemäß einer bevorzugten Weiterentwicklung der Erfindung kann bei einem Kontrollverfahren vorgesehen sein, dass das Kontrollverfahren ferner umfasst:
- Erfassen zumindest eines Vorlauftemperaturwerts der Heizvorrichtung durch eine Erfassungsvorrichtung des Kontrollsystems, wobei das Kontrollieren durch Anpassen des zumindest einen Widerstandwerts um zumindest einen Offset-Wert auf Grundlage des erfassten zumindest einen Vorlauftemperaturwerts durch die Kontrollvorrichtung erfolgt.

Der zumindest eine Vorlauftemperaturwert wird in und/oder an einem Vorlaufabschnitt der Heizvorrichtung erfasst. Das Erfassen des zumindest einen Vorlauftemperaturwerts ist bevorzugt als Temperaturmessung an und/oder in einer Vorlaufleitung der Heizvorrichtung, insbesondere als Temperaturmessung eines Fluides in einem Vorlaufabschnitt der Heizvorrichtung, zu verstehen.

Das Erfassen zumindest eines Vorlauftemperaturwerts der Heizvorrichtung durch eine Erfassungsvorrichtung des Kontrollsystems ermöglicht vorteilhaft ein Anpassen des zumindest einen Widerstandwerts um zumindest einen Offset-Wert auf Grundlage des erfassten zumindest einen Vorlauftemperaturwerts durch die Kontrollvorrichtung. Anschaulich beschrieben wird die Wirkung des Offset-Werts und/oder der Anpassung des zumindest einen Widerstandswerts auf den zumindest einen Vorlauftemperaturwert, insbesondere kontinuierlich und automatisch, überwacht und/oder analysiert.

Ein derart ausgestaltetes Kontrollverfahren ist durch das Erfassen zumindest eines Vorlauftemperaturwerts der Heizvorrichtung durch eine Erfassungsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Auswerten des zumindest einen Widerstandwerts zum Kategorisieren und/oder Bestimmen der Außentemperaturvorrichtung der Heizvorrichtung durch eine Auswertevorrichtung des Kontrollsystems.

Insbesondere umfasst das Kontrollverfahren das Bestimmen einer Widerstandskurve der Außentemperaturvorrichtung durch das Kategorisieren und/oder Bestimmen der Außentemperaturvorrichtung. Das Kategorisieren und/oder Bestimmen ist bevorzugt als Erfassen und Auswerten einer Vielzahl an Widerstandswerten der Außentemperaturvorrichtung, insbesondere über die Zeit, zu verstehen. Bevorzugt umfasst die Kontrollvorrichtung eine Speichervorrichtung zur Speicherung der Vielzahl an Widerstandswerten der Außentemperaturvorrichtung. Die Auswertevorrichtung ist zur Auswertung der Vielzahl an Widerstandswerten der Außentemperaturvorrichtung ausgestaltet. Bevorzugt umfasst das Auswerten des zumindest einen Widerstandwerts einen Vergleich mit zumindest einer Widerstandscharakteristik von wenigstens einer bekannten Außentemperaturvorrichtung, die beispielsweise auf der Speichervorrichtung oder auf einem später beschriebenen externen, verbundenen Server gespeichert ist.

Anschaulich beschrieben wird durch das Erfassen zumindest eines Widerstandwerts ein Abgleich mit typischen Verlaufskurven gängiger Außentemperaturvorrichtungen, wie beispielsweise NTC-Widerstandsvorrichtungen, RTD-Vorrichtungen, PT1000, PT100 und/oder anderen Außentemperaturvorrichtungen ermöglicht. Bevorzugt wird mittels einer entsprechenden Best-Fit-Analyse die angeschlossene Außentemperaturvorrichtung der Heizvorrichtung automatisch und verlässlich detektiert. Somit erhält man eine Verlaufskurve von Widerstandswerten zu der Außentemperaturvorrichtung über einen großen Bereich, ohne dass dafür eine vorherige Kenntnis der jeweils verbauten Außentemperaturvorrichtung notwendig ist. Somit vermeidet das erfindungsgemäße Kontrollverfahren eine aufwendige manuelle Vermessung oder gar einen Umbau der Außentemperaturvorrichtung. Ein derart ausgestaltetes Kontrollverfahren ist durch das Auswerten des zumindest einen Widerstandwerts zum Kategorisieren und/oder Bestimmen der Außentemperaturvorrichtung der Heizvorrichtung durch eine Auswertevorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Erfassen zumindest eines Außentemperaturwerts durch eine Außentemperaturvorrichtung des Kontrollsystems, wobei das Kategorisieren und/oder Bestimmen der Außentemperaturvorrichtung der Heizvorrichtung durch die Auswertevorrichtung auf Grundlage des erfassten zumindest einen Außentemperaturwerts erfolgt.

Die Außentemperaturvorrichtung des Kontrollsystems ist bevorzugt als zweite Außentemperaturvorrichtung für einen Vergleich mit der Außentemperaturvorrichtung der Heizvorrichtung zu verstehen. Die Außentemperaturvorrichtung des Kontrollsystems ist bevorzugt als lokale Außentemperaturvorrichtung ausgestaltet. Alternativ oder zusätzlich ist die Außentemperaturvorrichtung des Kontrollsystems als eine Datenschnittstelle zum Abrufen von Außentemperaturdaten ausgestaltet. Die Außentemperaturdaten sind bevorzugt aus einem Netzwerk und/oder über die nachstehende Kommunikationsvorrichtung abrufbar. Die Außentemperaturvorrichtung des Kontrollsystems ermöglicht vorteilhaft eine Kontrolle des zumindest einen Widerstandwerts der Außentemperaturvorrichtung der Heizvorrichtung durch beispielsweise einen Abgleich zwischen den Außentemperaturwerten. Die Außentemperaturvorrichtung des Kontrollsystems ermöglicht somit vorteilhaft ein verbessertes Kategorisieren und/oder Bestimmen der Außentemperaturvorrichtung der Heizvorrichtung durch die Auswertevorrichtung auf Grundlage der erfassten Außentemperaturwerte der Außentemperaturvorrichtung der Heizvorrichtung und der Außentemperaturvorrichtung des Kontrollsystems.

Durch die zeitgleiche Ermittlung von Widerstands- und Außentemperaturwerten erfolgt bevorzugt ein Abgleich mit typischen Verlaufskurven gängiger Außentemperaturvorrichtungen. Mittels entsprechender Best-Fit-Analyse wird die angeschlossene Außentemperaturvorrichtung, insbesondere automatisch und/oder verlässlich, detektiert. Somit ermöglicht das Kontrollverfahren bevorzugt eine Verlaufskurve von Widerstandswerten zur Außentemperaturvorrichtung der Heizvorrichtung über einen großen Bereich.

Ein derart ausgestaltetes Kontrollverfahren ist durch das Erfassen zumindest eines Außentemperaturwerts durch eine Außentemperaturvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Erfassen zumindest eines Rücklauftemperaturwerts der Heizvorrichtung durch die Erfassungsvorrichtung des Kontrollsystems,
- Vergleichen des erfassten zumindest einen Vorlauftemperaturwerts und des erfassten zumindest einen Rücklauftemperaturwerts zur Ermittlung einer Spreizung durch eine Vergleichsvorrichtung des Kontrollsystems, wobei das Anpassen des zumindest einen Widerstandwerts um zumindest einen Offset-Wert auf Grundlage der ermittelten Spreizung durch die Kontrollvorrichtung erfolgt.

Der zumindest eine Rücklauftemperaturwert wird in und/oder an einem Rücklaufabschnitt der Heizvorrichtung erfasst. Das Erfassen des zumindest einen Rücklauftemperaturwerts ist bevorzugt als Temperaturmessung an und/oder in einer Rücklaufleitung der Heizvorrichtung, insbesondere als Temperaturmessung eines Fluides in einem Rücklaufabschnitt der Heizvorrichtung, zu verstehen.

Das Erfassen zumindest eines Rücklauftemperaturwerts der Heizvorrichtung durch eine Erfassungsvorrichtung des Kontrollsystems ermöglicht vorteilhaft eine Ermittlung der Spreizung der Heizvorrichtung in einem aktuellen Betriebszustand. Die Spreizung ist bevorzugt als Differenz zwischen einem Vorlauftemperaturwert und einem Rücklauftemperaturwert zu verstehen. Die Erfassungsvorrichtung umfasst für das Erfassen des zumindest einen Vorlauftemperaturwerts und des zumindest einen Rücklauftemperaturwerts bevorzugt zumindest zwei Temperatursensoren.

Das Anpassen des zumindest einen Widerstandwerts um zumindest einen Offset-Wert erfolgt auf Grundlage der ermittelten Spreizung durch die Kontrollvorrichtung, um einen vorteilhaften Betrieb der Heizvorrichtung zu ermöglichen.

Bevorzugt wird die Differenz von Vorlauf- und Rücklauftemperatur zeitgleich zu der vorherrschenden Außentemperatur gegenübergestellt und durch das Kontrollsystem bewertet. Die Bewertung erfolgt bevorzugt automatisiert, insbesondere ohne manuelle und/oder menschliche Analyse, besonders bevorzugt durch entsprechende statistische Verfahren in Anlehnung an typische Spreizungskurven für das Bauwerk und/oder eine spezifische Liegenschaft und/oder die spezifische Heizvorrichtung.

Für eine Heizvorrichtung gibt es eine optimale Spreizung, bei der der zur Erreichung einer Zieltemperatur in dem Bauwerk erforderliche Energieaufwand und/oder Brennstoff minimiert wird. Um die Spreizung im Zeitverlauf zu optimieren wird der zumindest eine Widerstandwert um zumindest einen Offset-Wert durch die Kontrollvorrichtung angepasst. Grundsätzlich ist ein Offset-Wert sowohl mit positivem als auch negativem Wert möglich, jedoch ist eine Verbrauchsminderung in der Regel nur durch einen Offset-Wert möglich, der einem positiven Temperatur-Offset entspricht. Das erfindungsgemäße Kontrollverfahren ermöglicht eine Einhaltung und/oder Annäherung der ermittelten Spreizung an die optimalen Werte durch das Kontrollieren der Heizvorrichtung durch die Kontrollvorrichtung. Die angestrebten Werte der Spreizung sind bevorzugt auf der zuvor beschriebenen Speichervorrichtung hinterlegt und/oder über die nachfolgend beschriebene Kommunikationsvorrichtung abrufbar. Ein Vorteil dieser Ausgestaltung des Kontrollverfahrens ist die bevorzugt autarke Funktionsweise ohne die Notwendigkeit eines manuellen Einwirkens. Bevorzugt ermöglicht das Kontrollverfahren zum Beispiel aufgrund einer Nutzungsänderung in dem Bauwerk eine Nachjustierung der Heizvorrichtung. Bevorzugt optimiert das Kontrollsystem die Heizvorrichtung dauerhaft selbst.

Ein derart ausgestaltetes Kontrollverfahren ist durch das Vergleichen des erfassten zumindest einen Vorlauftemperaturwerts und des erfassten zumindest einen Rücklauftemperaturwerts zur Ermittlung einer Spreizung durch eine Vergleichsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Initialisieren einer datenkommunizierenden Verbindung durch eine Kommunikationsvorrichtung des Kontrollsystems, wobei die Kommunikationsvorrichtung zum Senden und/oder Empfangen von Daten ausgestaltet ist.

Die Kommunikationsvorrichtung ist insbesondere zur Datenkommunikation mit einer Backendvorrichtung und/oder einem mobilen Endgerät ausgestaltet. Bevorzugt wird über die Kommunikationsvorrichtung eine Eingabe eines Benutzers und/oder Anwenders zum Kontrollieren, Steuern und/oder Regeln der Heizvorrichtung durch das Kontrollsystem ermöglicht. Beispielsweise ermöglicht die Kommunikationsvorrichtung eine Eingabe an einem Web-Ul einer Backendvorrichtung von zumindest einem Offset-Wert durch einen Anwender. Alternativ oder zusätzlich ermöglicht die Kommunikationsvorrichtung die Freigabe und/oder Ablehnung von vorgeschlagenen Regelungen der Heizvorrichtung durch eine Eingabevorrichtung eines mobilen Endgeräts. Die Kommunikationsvorrichtung ermöglicht bevorzugt das Bereitstellen von Vergleichsdaten für das Kategorisieren und/oder Bestimmen der Außentemperaturvorrichtung der Heizvorrichtung durch die Auswertevorrichtung. Die Kommunikationsvorrichtung ermöglicht bevorzugt eine datenkommunizierende Verbindung mit einer Servervorrichtung zum Senden und/oder Empfangen von Daten, insbesondere Außentemperaturwerte, Regelparameter für die Vorlauftemperaturwerte und/oder die Spreizung. Die datenkommunizierende Verbindung wird bevorzugt über ein Mobilfunknetz, ein kabelgebundenes oder kabelloses Netzwerk, Breitbandnetz und/oder Internet ermöglicht. Ein derart ausgestaltetes Kontrollverfahren ist durch das Initialisieren einer datenkommunizierenden Verbindung durch eine Kommunikationsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren, insbesondere das Kontrollieren, ferner umfasst:
- Regeln der Heizvorrichtung durch eine Regelvorrichtung, wobei das Regeln durch Anpassen des zumindest einen Widerstandwerts um den zumindest einen Offset-Wert auf Grundlage des erfassten zumindest einen Vorlauftemperaturwerts und/oder auf Grundlage der ermittelten Spreizung durch die Regelvorrichtung zumindest abschnittsweise automatisch erfolgt.

Das Regeln der Heizvorrichtung durch eine Regelvorrichtung stellt eine besonders vorteilhafte Weiterentwicklung des Kontrollverfahrens dar, da ein zumindest abschnittsweise automatisches Anpassen des zumindest einen Widerstandwerts um den zumindest einen Offset-Wert auf Grundlage des erfassten zumindest einen Vorlauftemperaturwerts und/oder auf Grundlage der ermittelten Spreizung durch die Regelvorrichtung ermöglicht wird. Über das Steuern der Heizvorrichtung hinaus wird somit eine Regelung der Heizvorrichtung ermöglicht und damit ein höherer Grad an Automatisierung der Heizvorrichtung und folglich ein Gewinn an Komfort für den Anwender erreicht. Eine erfindungsgemäße Regelung umfasst bevorzugt eine Rückkopplung von zumindest einer der beschriebenen Messgrößen auf das Regeln und/oder auf das Kontrollverfahren. Ein derart ausgestaltetes Kontrollverfahren ist durch das Regeln der Heizvorrichtung durch eine Regelvorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Kalibrieren der Kontrollvorrichtung durch Anpassen des zumindest einen Widerstandwerts um zumindest zwei Offset-Werte und Protokollieren der jeweils resultierenden Vorlauftemperaturwerte.

Das Kalibieren ermöglicht insbesondere das Bestimmen einer Betriebskurve der Heizvorrichtung durch das Kalibrieren der Kontrollvorrichtung. Bevorzugt ermöglicht das Kalibrieren ein Anpassen des zumindest einen Widerstandwerts und jeweils ein Protokollieren des resultierenden Vorlauftemperaturwerts. Bevorzugt werden durch das Kalibrieren eine Vielzahl an Widerstandswerten durch verschiedene Offset-Werte, insbesondere nacheinander, erzeugt, um somit eine Kurve an entsprechend resultierenden Vorlauftemperaturwerten zu erhalten. Die Vielzahl an Offset-Werten werden bevorzugt zeitlich nacheinander erzeugt, wobei bevorzugt zwischen dem Erzeugen von zwei Offset-Werten eine Trägheit der Heizvorrichtung berücksichtigbar ist. Anschaulich formuliert wird für das Kalibrieren ein erster Offset-Wert durch die Kontrollvorrichtung eingestellt und die Reaktion der Heizvorrichtung, insbesondere der Vorlauftemperaturwert durch die Erfassungsvorrichtung des Kontrollsystems, protokolliert. Nach einer gewissen Zeit und/oder wenn keine oder im Wesentlichen keine Veränderung der Heizvorrichtung, insbesondere des Vorlauftemperaturwerts, mehr feststellbar ist, wird ein nächster Offset-Wert durch die Kontrollvorrichtung eingestellt und erneut die Reaktion der Heizvorrichtung, insbesondere der Vorlauftemperaturwert durch die Erfassungsvorrichtung des Kontrollsystems, protokolliert. Durch beliebige Wiederholung der voranstehenden Schritte kann eine zunehmend detaillierte Kalibrierung der Heizvorrichtung erzeugt werden. Das Kontrollsystem lernt durch das Kalibrieren, anschaulich formuliert, das Betriebsverhalten der Heizvorrichtung kennen und/oder einen Zusammenhang zwischen einem Offset-Wert und einem jeweiligen Vorlauftemperaturwert. Bevorzugt umfasst das Kontrollsystem eine Speichervorrichtung zur Speicherung der erfassten Kalibrierungsdaten. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern.

Anschaulich und beispielhaft formuliert ermöglicht das Kontrollverfahren innerhalb eines Kalibrierungsmodus durch die Kontrollvorrichtung innerhalb eines vorgegebenen Zeitintervalls Offset-Werte, die eine Außentemperaturkurve von -10 Grad Celsius bis +25 Grad Celsius simulieren. Die Heizungsregelung reagiert auf diese Widerstandswerte entsprechend und stellt die korrespondierenden Vorlauftemperaturen im Heiz-System ein. Diese Vorlauftemperaturen werden erfasst und den simulierten Außentemperaturwerten gegenübergestellt. Der Kalibrierungsmodus läuft dabei bevorzugt über einen ausreichend langen Zeitraum, um beispielsweise auch zeitliche Besonderheiten wie eine Nachtabsenkung und/oder Nachtabschaltung mittels entsprechender statistischer Verfahren verlässlich detektieren zu können. Im Ergebnis wird das an der Heizvorrichtung eingestellte Programm, die Heizkurve der Heizvorrichtung und/oder ein Zeitprogramm der Heizvorrichtung herstellerübergreifend automatisch ermittelt.

Ein derart ausgestaltetes Kontrollverfahren ist durch das Kalibrieren der Kontrollvorrichtung durch Anpassen des zumindest einen Widerstandwerts um zumindest zwei Offset-Werte und Protokollieren der jeweils resultierenden Vorlauftemperaturwerte besonders vorteilhaft, da das Kontrollieren einer Heizvorrichtung für ein Bauwerk durch das Kontrollsystem besonders einfach ermöglicht wird. Zusätzlich erfolgt bevorzugt eine automatische, permanente Optimierung des Systems für jede individuelle Heizungsanlage, auch wenn sich Rahmenbedingungen, wie Dämmung des Bauwerks, Urlaub und/oder Abwesenheit von Bewohnern ändern.

Gemäß einer bevorzugten Weiterentwicklung der Erfindung kann bei einem Kontrollverfahren vorgesehen sein, dass die Kontrollvorrichtung zum Anpassen des zumindest einen Widerstandwerts um zumindest einen Offset-Wert ausgestaltet ist, wobei die Kontrollvorrichtung eine Widerstandsvorrichtung und/oder ein Widerstandsnetzwerk zum positiven und/oder negativen Anpassen des zumindest einen Widerstandwerts umfasst. Wie voranstehend beschrieben, erfolgt das Kontrollieren der Heizvorrichtung durch Anpassen des zumindest einen Widerstandwerts um zumindest einen Offset-Wert durch die Kontrollvorrichtung. Die Kontrollvorrichtung weist eine Widerstandsvorrichtung und/oder ein Widerstandsnetzwerk zum positiven und/oder negativen Anpassen des zumindest einen Widerstandwerts und/oder zum Erzeugen eines positiven und/oder negativen Offset-Werts auf. Beispielhaft umfasst die Kontrollvorrichtung zum Kontrollieren der Heizvorrichtung und/oder die Ermittlungsvorrichtung zum Ermitteln des zumindest einen Widerstandwerts zumindest einen Shuntwiderstand, bevorzugt eine elektrische Schaltung mit einer Vielzahl an Widerständen. Ein positiver Offset-Wert wird bevorzugt mittels Reihenschaltung von zumindest einem Widerstand zu der Außentemperaturvorrichtung ermöglicht. Ein negativer Offset-Wert wird bevorzugt mittels Parallelschaltung von zumindest einem Widerstand zu der Außentemperaturvorrichtung ermöglicht. Bevorzugt umfasst die Kontrollvorrichtung zumindest ein grobes Stellglied für grobe Offset-Wert-Einstellungen und zumindest ein feines Stellglied für feine Offset-Wert-Einstellungen. Ein derart ausgestaltetes Kontrollverfahren ist durch die konstruktive Ausgestaltung der Kontrollvorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollverfahren vorgesehen sein, dass das Kontrollverfahren ferner umfasst:
- Erkennen eines Betriebsfehlers des Kontrollsystems durch eine Erkennungsvorrichtung, wobei bei einem erkannten Betriebsfehler ein Zurücksetzen des zumindest einen Offset-Werts durch die Kontrollvorrichtung und/oder die Erkennungsvorrichtung erfolgt.

Ein Betriebsfehler ist im Rahmen der Erfindung bespielhaft als ein Energieausfall des Kontrollsystems, als erfasste Widerstandswerte, Vorlauftemperaturwerte, Rücklauftemperaturwerte, Außentemperaturwerte und/oder weitere Messwerte, die außerhalb eines zulässigen Bereichs für die jeweilige Messgröße liegen, als erfasster Defekt einer Vorrichtung des Kontrollsystems und/oder als anderweitiger Betriebsfehler des Kontrollsystems zu verstehen. Bei einem erkannten Betriebsfehler ermöglicht das Kontrollverfahren ein Zurücksetzen des zumindest einen Offset-Werts, sodass keine Anpassung des zumindest einen Widerstandwerts der Außentemperaturvorrichtung der Heizvorrichtung durch einen Offset-Wert mehr erfolgt. Es sei hierbei bevorzugt zu vernachlässigen, dass das Kontrollsystem selbst, durch den Anschluss der Kontrollvorrichtung an der Heizvorrichtung, eine geringfügige Veränderung des Widerstandswerts erzeugt. Ein derart ausgestalteter Failsafe-Modus des Kontrollsystems ermöglicht vorteilhaft eine Minimierung und/oder Vermeidung eines Einflusses des Kontrollsystems auf die Heizvorrichtung, wenn ein Betriebsfehler erkannt wurde und/oder das Kontrollsystem nicht ordnungsgemäß betrieben werden kann. Somit ermöglicht das erfindungsgemäße Kontrollverfahren auch bei Ausfall des Kontrollsystems einen fortlaufenden Betrieb der Heizvorrichtung und somit ein größeres Zeitfenster zur Reaktion auf einen Betriebsfehler. Ein derart ausgestaltetes Kontrollverfahren ist durch das Erkennen eines Betriebsfehlers des Kontrollsystems durch eine Erkennungsvorrichtung besonders vorteilhaft, da das Kontrollieren einer Heizvorrichtung für ein Bauwerk durch das Kontrollsystem besonders einfach ermöglicht wird.

Gemäß einem zweiten Aspekt der Erfindung wird die Aufgabe durch ein Kontrollsystem zum Kontrollieren einer Heizvorrichtung für ein Bauwerk gelöst. Das Kontrollsystem weist eine Ermittlungsvorrichtung, eine Erfassungsvorrichtung und eine Kontrollvorrichtung auf, wobei das Kontrollsystem zur Ausführung des Kontrollverfahrens gemäß dem ersten Aspekt ausgestaltet ist. Insbesondere umfasst das Kontrollsystem eine Auswertevorrichtung, eine Außentemperaturvorrichtung, eine Kommunikationsvorrichtung, eine Regelvorrichtung, eine Vergleichsvorrichtung und/oder eine Erkennungsvorrichtung.

Bei dem beschriebenen Kontrollsystem ergeben sich sämtliche Vorteile, die bereits zu dem Kontrollverfahren gemäß dem ersten Aspekt der Erfindung beschrieben worden sind.

Gemäß einem dritten Aspekt der Erfindung wird die Aufgabe durch ein Computerprogrammprodukt zum Kontrollieren einer Heizvorrichtung für ein Bauwerk durch das Kontrollsystem gelöst. Das Computerprogrammprodukt umfasst Befehle, die bewirken, dass das Kontrollsystem gemäß dem zweiten Aspekt die Verfahrensschritte gemäß dem ersten Aspekt ausführt. Bei dem beschriebenen Computerprogrammprodukt ergeben sich sämtliche Vorteile, die bereits zu dem Kontrollverfahren gemäß dem ersten Aspekt der Erfindung und/oder dem Kontrollsystem gemäß dem zweiten Aspekt der Erfindung beschrieben worden sind.

Bei dem Kontrollverfahren kann es sich insbesondere um ein computerimplementiertes Verfahren handeln. Das Computerprogrammprodukt kann als computerlesbarer Anweisungscode in jeder geeigneten Programmiersprache, wie beispielsweise in JAVA, C++, C# und/oder Python, implementiert sein. Das Computerprogrammprodukt kann auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Der Anweisungscode kann einen Computer oder andere programmierbare Geräte wie eine Rechnereinheit des Kontrollsystems derart beeinflussen oder steuern, dass die Befehle ausgeführt werden. Ferner kann das Computerprogrammprodukt in einem Netzwerk wie beispielsweise dem Internet bereitstellbar sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert werden und/oder sein.

Gemäß einem vierten Aspekt der Erfindung wird die Aufgabe durch ein computerlesbares Medium gelöst, auf dem das Computerprogrammprodukt gemäß dem dritten Aspekt gespeichert ist.

Ein erfindungsgemäßes Kontrollverfahren, ein Kontrollsystem, ein Computerprogrammprodukt sowie ein computerlesbares Medium werden nachfolgend anhand von Zeichnungen näher erläutert. Es zeigen jeweils schematisch:
- Figur 1: in einer funktionalen Ansicht eine Heizvorrichtung in einem Bauwerk, eine Außentemperaturvorrichtung der Heizvorrichtung und ein Kontrollsystem,
- Figur 2: in einer funktionalen Ansicht eine Heizvorrichtung mit einer Außentemperaturvorrichtung und einem Kontrollsystem,
- Figur 3: in einer funktionalen Ansicht ein computerlesbares Medium mit einem Computerprogrammprodukt, und
- Figur 4: in einem Flussdiagramm ein Kontrollverfahren.

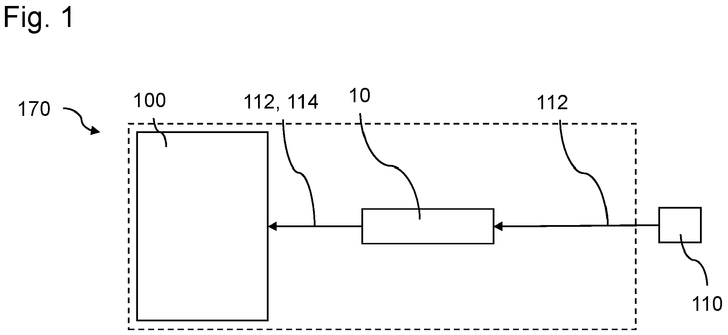

Elemente mit gleicher Funktion und Wirkungsweise sind in den Fig. 1 bis 4 jeweils mit denselben Bezugszeichen versehen.

In Fig. 1 ist schematisch in einer funktionalen Ansicht eine Heizvorrichtung 100 in einem Bauwerk 170, eine Außentemperaturvorrichtung 110 der Heizvorrichtung 100 und ein Kontrollsystem 10 gezeigt. Das Kontrollsystem 10 ist zum Kontrollieren 206 (nicht gezeigt) der Heizvorrichtung 100 ausgestaltet und zwischen die Heizvorrichtung 100 und die Außentemperaturvorrichtung 110 geschaltet. Das Kontrollsystem 10 ist zum Kontrollieren 206 (nicht gezeigt) der Heizvorrichtung 100 durch Anpassen des Widerstandwerts 112 der Außentemperaturvorrichtung 110 um einen Offset-Wert 114 ausgestaltet.

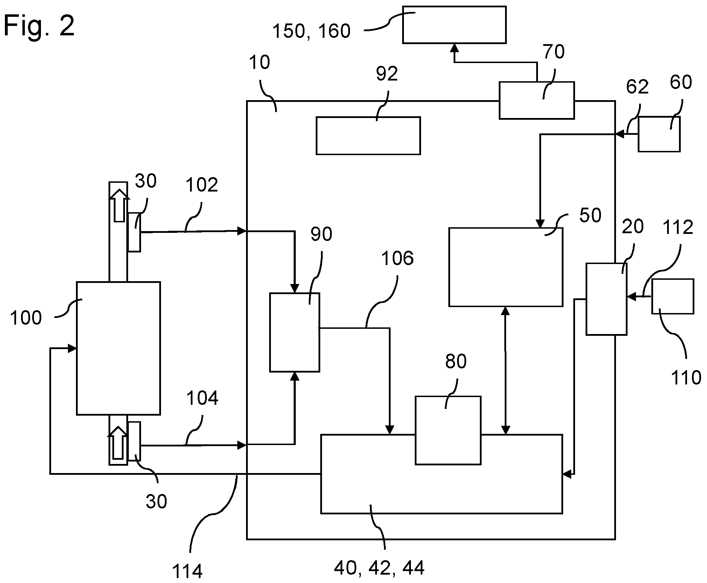

In Fig. 2 ist schematisch in einer funktionalen Ansicht eine Heizvorrichtung 100 mit einer Außentemperaturvorrichtung 110 und einem Kontrollsystem 10 gezeigt. Das Kontrollsystem 10 ist zum Ausführen des Kontrollverfahrens 200 (nicht gezeigt) zum Kontrollieren 206 (nicht gezeigt) der Heizvorrichtung 100 ausgestaltet. Das Kontrollsystem 10 umfasst eine Ermittlungsvorrichtung 20 zum Ermitteln 202 (nicht gezeigt) eines Widerstandwerts 112 einer Außentemperaturvorrichtung 110 der Heizvorrichtung 100. Das Kontrollsystem 10 umfasst ferner eine Kontrollvorrichtung 40 zum Kontrollieren 206 (nicht gezeigt) der Heizvorrichtung 100, wobei das Kontrollieren 206 (nicht gezeigt) durch Anpassen des Widerstandwerts 112 um einen Offset-Wert 114 durch die Kontrollvorrichtung 40 erfolgt. Das Kontrollsystem 10 umfasst ferner eine Erfassungsvorrichtung 30 zum Erfassen 204 (nicht gezeigt) eines Vorlauftemperaturwerts 102 der Heizvorrichtung 100, wobei das Kontrollieren 206 (nicht gezeigt) durch Anpassen des Widerstandwerts 112 um den Offset-Wert 114 auf Grundlage des erfassten Vorlauftemperaturwerts 102 durch die Kontrollvorrichtung 40 erfolgt. Das Kontrollsystem 10 umfasst ferner eine Auswertevorrichtung 50 zum Auswerten 208 (nicht gezeigt) des Widerstandwerts 112 zum Bestimmen der Außentemperaturvorrichtung 110 der Heizvorrichtung 100. Die Auswertevorrichtung 50 ist ferner zum Erfassen 210 (nicht gezeigt) eines Außentemperaturwerts 62 durch eine Außentemperaturvorrichtung 60 des Kontrollsystems 10 ausgestaltet, wobei das Bestimmen der Außentemperaturvorrichtung 110 der Heizvorrichtung 100 durch die Auswertevorrichtung 50 auf Grundlage des erfassten Außentemperaturwerts 62 der Außentemperaturvorrichtung 60 des Kontrollsystems 10 erfolgt. Die Erfassungsvorrichtung 30 des Kontrollsystems 10 ist ferner zum Erfassen 212 (nicht gezeigt) eines Rücklauftemperaturwerts 104 der Heizvorrichtung 100 ausgestaltet. Die Erfassungsvorrichtung 30 ist beispielhaft zweiteilig ausgestaltet. Das Kontrollsystem 10 umfasst ferner eine Vergleichsvorrichtung 90 zum Vergleichen 214 (nicht gezeigt) des erfassten Vorlauftemperaturwerts 102 und des erfassten Rücklauftemperaturwerts 104 zur Ermittlung einer Spreizung 106 durch die Vergleichsvorrichtung 90, wobei das Anpassen des Widerstandwerts 112 um den Offset-Wert 114 auf Grundlage der ermittelten Spreizung 106 durch die Kontrollvorrichtung 40 erfolgt. Das Kontrollsystem 10 umfasst ferner eine Kommunikationsvorrichtung 70 zum Initialisieren 216 (nicht gezeigt) einer datenkommunizierenden Verbindung, wobei die Kommunikationsvorrichtung 70 zum Senden und Empfangen von Daten ausgestaltet ist. Die Kommunikationsvorrichtung 70 ist zur Datenkommunikation mit einer Backendvorrichtung 150 und einem mobilen Endgerät 160 ausgestaltet. Das Kontrollsystem 10 umfasst ferner eine Regelvorrichtung 80 zum Regeln 218 (nicht gezeigt) der Heizvorrichtung 100, wobei das Regeln 218 (nicht gezeigt) durch Anpassen des Widerstandwerts 112 um den Offset-Wert 114 auf Grundlage des erfassten Vorlauftemperaturwerts 102 und auf Grundlage der ermittelten Spreizung 106 durch die Regelvorrichtung 80 automatisch erfolgt. Die Kontrollvorrichtung 40 ist zum Anpassen des Widerstandwerts 112 um den Offset-Wert 114 ausgestaltet, wobei die Kontrollvorrichtung 40 eine Widerstandsvorrichtung 42 und ein Widerstandsnetzwerk 44 zum positiven und negativen Anpassen des Widerstandwerts 112 umfasst. Das Kontrollsystem 10 umfasst ferner eine Erkennungsvorrichtung 92 zum Erkennen 222 (nicht gezeigt) eines Betriebsfehlers des Kontrollsystems 10, wobei bei einem erkannten Betriebsfehler ein Zurücksetzen 224 (nicht gezeigt) des Offset-Werts 114 durch die Kontrollvorrichtung 40 erfolgt.

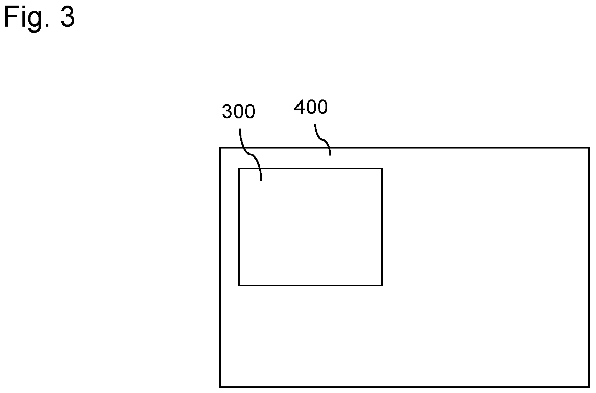

In Fig. 3 ist schematisch in einer funktionalen Ansicht ein computerlesbares Medium 400 mit einem Computerprogrammprodukt 300 gezeigt. Das Computerprogrammprodukt 300 umfasst Befehle, die bewirken, dass das Kontrollsystem 10 (nicht gezeigt) die Schritte des Kontrollverfahrens 200 (nicht gezeigt) ausführt. Das Computerprogrammprodukt 300 ist auf dem computerlesbaren Medium 400 gespeichert.

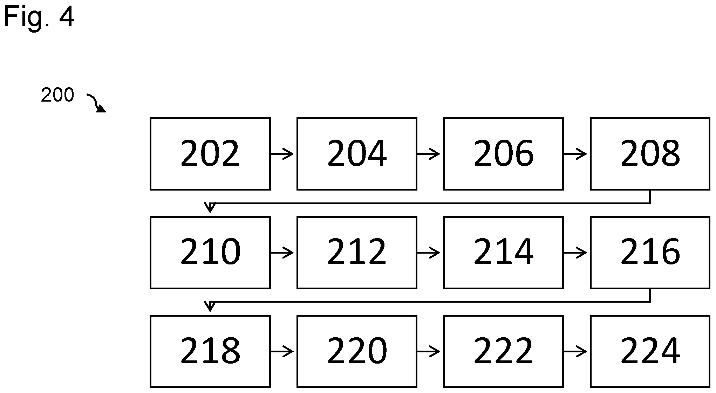

In Fig. 4 ist schematisch in einem Flussdiagramm eine erfindungsgemäße Ausgestaltung des Kontrollverfahrens 200 gezeigt. Für eine verbesserte Übersichtlichkeit sind in Fig. 4 nur die Bezugszeichen der Verfahrensschritte angegeben. Das Ermittlungsverfahren 200 umfasst in einem ersten Verfahrensschritt das Ermitteln 202 eines Widerstandwerts 112 einer Außentemperaturvorrichtung 110 der Heizvorrichtung 100 durch eine Ermittlungsvorrichtung 20 des Kontrollsystems 10. Das Ermittlungsverfahren 200 umfasst in einem weiteren Verfahrensschritt das Erfassen 204 eines Vorlauftemperaturwerts 102 der Heizvorrichtung 100 durch eine Erfassungsvorrichtung 30 des Kontrollsystems 10, wobei das Kontrollieren 206 durch Anpassen des Widerstandwerts 112 um einen Offset-Wert 114 auf Grundlage des erfassten Vorlauftemperaturwerts 102 durch die Kontrollvorrichtung 40 erfolgt. Das Ermittlungsverfahren 200 umfasst in einem weiteren Verfahrensschritt das Kontrollieren 206 der Heizvorrichtung 100 durch eine Kontrollvorrichtung 40 des Kontrollsystems 10, wobei das Kontrollieren 206 durch Anpassen des Widerstandwerts 112 um den Offset-Wert 114 durch die Kontrollvorrichtung 40 erfolgt. Das Ermittlungsverfahren 200 umfasst in einem weiteren Verfahrensschritt das Auswerten 208 des Widerstandwerts 112 zum Kategorisieren der Außentemperaturvorrichtung 110 der Heizvorrichtung 100 durch eine Auswertevorrichtung 50 des Kontrollsystems 10. Das Ermittlungsverfahren 200 umfasst in einem weiteren Verfahrensschritt das Erfassen 210 eines Außentemperaturwerts 62 durch eine Außentemperaturvorrichtung 60 des Kontrollsystems 10, wobei das Kategorisieren der Außentemperaturvorrichtung 110 der Heizvorrichtung 100 durch die Auswertevorrichtung 50 auf Grundlage des erfassten Außentemperaturwerts 62 erfolgt. Das Ermittlungsverfahren 200 umfasst in einem weiteren Verfahrensschritt das Erfassen 212 eines Rücklauftemperaturwerts 104 der Heizvorrichtung 100 durch die Erfassungsvorrichtung 30 des Kontrollsystems 10. Das Ermittlungsverfahren 200 umfasst in einem weiteren Verfahrensschritt das Vergleichen 214 des erfassten Vorlauftemperaturwerts 102 und des erfassten Rücklauftemperaturwerts 104 zur Ermittlung einer Spreizung 106 durch eine Vergleichsvorrichtung 90 des Kontrollsystems 10, wobei das Anpassen des Widerstandwerts 112 um den Offset-Wert 114 auf Grundlage der ermittelten Spreizung 106 durch die Kontrollvorrichtung 40 erfolgt. Das Ermittlungsverfahren 200 umfasst in einem weiteren Verfahrensschritt das Initialisieren 216 einer datenkommunizierenden Verbindung durch eine Kommunikationsvorrichtung 70 des Kontrollsystems 10, wobei die Kommunikationsvorrichtung 70 zum Senden und Empfangen von Daten ausgestaltet ist. Das Ermittlungsverfahren 200 umfasst in einem weiteren Verfahrensschritt das Regeln 218 der Heizvorrichtung 100 durch eine Regelvorrichtung 80, wobei das Regeln 218 durch Anpassen des Widerstandwerts 112 um den Offset-Wert 114 auf Grundlage des erfassten Vorlauftemperaturwerts 102 und auf Grundlage der ermittelten Spreizung 106 durch die Regelvorrichtung 80 automatisch erfolgt. Das Ermittlungsverfahren 200 umfasst in einem weiteren Verfahrensschritt das Kalibrieren 220 der Kontrollvorrichtung 40 durch Anpassen des Widerstandwerts 112 um eine Vielzahl an Offset-Werten 114 und Protokollieren der jeweils resultierenden Vorlauftemperaturwerte 102. Das Ermittlungsverfahren 200 umfasst in einem weiteren Verfahrensschritt das Erkennen 222 eines Betriebsfehlers des Kontrollsystems 10 durch eine Erkennungsvorrichtung 92, wobei bei einem erkannten Betriebsfehler ein Zurücksetzen 224 des Offset-Werts 114 durch die Kontrollvorrichtung 40 erfolgt.

### Bezugszeichenliste

- 10: Kontrollsystem
- 20: Ermittlungsvorrichtung
- 30: Erfassungsvorrichtung
- 40: Kontrollvorrichtung
- 42: Widerstandsvorrichtung
- 44: Widerstandsnetzwerk
- 50: Auswertevorrichtung
- 60: Außentemperaturvorrichtung des Kontrollsystems
- 62: Außentemperaturwert
- 70: Kommunikationsvorrichtung
- 80: Regelvorrichtung
- 90: Vergleichsvorrichtung
- 92: Erkennungsvorrichtung

- 100: Heizvorrichtung
- 102: Vorlauftemperaturwert
- 104: Rücklauftemperaturwert
- 106: Spreizung

- 110: Außentemperaturvorrichtung der Heizvorrichtung
- 112: Widerstandwert
- 114: Offset-Wert

- 150: Backendvorrichtung
- 160: mobiles Endgerät
- 170: Bauwerk

- 200: Kontrollverfahren
- 202: Ermitteln
- 204: Erfassen
- 206: Kontrollieren
- 208: Auswerten

- 210: Erfassen
- 212: Erfassen
- 214: Vergleichen
- 216: Initialisieren
- 218: Regeln
- 220: Kalibrieren
- 222: Erkennen
- 224: Zurücksetzen

- 300: Computerprogrammprodukt
- 400: Computerlesbares Medium

## Patentansprüche

1. Kontrollverfahren (200) zum Kontrollieren (206) einer Heizvorrichtung (100) für ein Bauwerk (170) durch ein Kontrollsystem (10), das Kontrollverfahren (200) umfassend:
- Ermitteln (202) zumindest eines Widerstandwerts (112) einer Außentemperaturvorrichtung (110) der Heizvorrichtung (100) durch eine Ermittlungsvorrichtung (20) des Kontrollsystems (10),
- Kontrollieren (206) der Heizvorrichtung (100) durch eine Kontrollvorrichtung (40) des Kontrollsystems (10), wobei das Kontrollieren (206) durch Anpassen des zumindest einen Widerstandwerts (112) um zumindest einen Offset-Wert (114) durch die Kontrollvorrichtung (40) erfolgt.

2. Kontrollverfahren (200) nach Anspruch 1,
**dadurch gekennzeichnet,**
**dass** das Kontrollverfahren (200) ferner umfasst:
- Erfassen (204) zumindest eines Vorlauftemperaturwerts (102) der Heizvorrichtung (100) durch eine Erfassungsvorrichtung (30) des Kontrollsystems (10), wobei das Kontrollieren (206) durch Anpassen des zumindest einen Widerstandwerts (112) um zumindest einen Offset-Wert (114) auf Grundlage des erfassten zumindest einen Vorlauftemperaturwerts (102) durch die Kontrollvorrichtung (40) erfolgt.

3. Kontrollverfahren (200) nach einem der vorangegangenen Ansprüche,
**dadurch gekennzeichnet,**
**dass** das Kontrollverfahren (200) ferner umfasst:
- Auswerten (208) des zumindest einen Widerstandwerts (112) zum Kategorisieren und/oder Bestimmen der Außentemperaturvorrichtung (110) der Heizvorrichtung (100) durch eine Auswertevorrichtung (50) des Kontrollsystems (10).

4. Kontrollverfahren (200) nach Anspruch 3,
**dadurch gekennzeichnet,**
**dass** das Kontrollverfahren (200) ferner umfasst:
- Erfassen (210) zumindest eines Außentemperaturwerts (62) durch eine Außentemperaturvorrichtung (60) des Kontrollsystems (10), wobei das Kategorisieren und/oder Bestimmen der Außentemperaturvorrichtung (110) der Heizvorrichtung (100) durch die Auswertevorrichtung (50) auf Grundlage des erfassten zumindest einen Außentemperaturwerts (62) erfolgt.

5. Kontrollverfahren (200) nach einem der vorangegangenen Ansprüche 2 bis 4,
**dadurch gekennzeichnet,**
**dass** das Kontrollverfahren (200) ferner umfasst:
- Erfassen (212) zumindest eines Rücklauftemperaturwerts (104) der Heizvorrichtung (100) durch die Erfassungsvorrichtung (30) des Kontrollsystems (10),
- Vergleichen (214) des erfassten zumindest einen Vorlauftemperaturwerts (102) und des erfassten zumindest einen Rücklauftemperaturwerts (104) zur Ermittlung einer Spreizung (106) durch eine Vergleichsvorrichtung (90) des Kontrollsystems (10), wobei das Anpassen des zumindest einen Widerstandwerts (112) um zumindest einen Offset-Wert (114) auf Grundlage der ermittelten Spreizung (106) durch die Kontrollvorrichtung (40) erfolgt.

6. Kontrollverfahren (200) nach einem der vorangegangenen Ansprüche,
**dadurch gekennzeichnet,**
**dass** das Kontrollverfahren (200) ferner umfasst:
- Initialisieren (216) einer datenkommunizierenden Verbindung durch eine Kommunikationsvorrichtung (70) des Kontrollsystems (10), wobei die Kommunikationsvorrichtung (70) zum Senden und/oder Empfangen von Daten ausgestaltet ist.

7. Kontrollverfahren (200) nach einem der vorangegangenen Ansprüche,
**dadurch gekennzeichnet,**
**dass** das Kontrollverfahren (200) ferner umfasst:
- Regeln (218) der Heizvorrichtung (100) durch eine Regelvorrichtung (80), wobei das Regeln (218) durch Anpassen des zumindest einen Widerstandwerts (112) um den zumindest einen Offset-Wert (114) auf Grundlage des erfassten zumindest einen Vorlauftemperaturwerts (102) und/oder auf Grundlage der ermittelten Spreizung (106) durch die Regelvorrichtung (80) zumindest abschnittsweise automatisch erfolgt.

8. Kontrollverfahren (200) nach einem der vorangegangenen Ansprüche,
**dadurch gekennzeichnet,**
**dass** das Kontrollverfahren (200) ferner umfasst:
- Kalibrieren (220) der Kontrollvorrichtung (40) durch Anpassen des zumindest einen Widerstandwerts (112) um zumindest zwei Offset-Werte (114) und Protokollieren der jeweils resultierenden Vorlauftemperaturwerte (102).

9. Kontrollverfahren (200) nach einem der vorangegangenen Ansprüche,
**dadurch gekennzeichnet,**
**dass** die Kontrollvorrichtung (40) zum Anpassen des zumindest einen Widerstandwerts (112) um zumindest einen Offset-Wert (114) ausgestaltet ist, wobei die Kontrollvorrichtung (40) eine Widerstandsvorrichtung (42) und/oder ein Widerstandsnetzwerk (44) zum positiven und/oder negativen Anpassen des zumindest einen Widerstandwerts (112) umfasst.

10. Kontrollverfahren (200) nach einem der vorangegangenen Ansprüche,
**dadurch gekennzeichnet,**
**dass** das Kontrollverfahren (200) ferner umfasst:
- Erkennen (222) eines Betriebsfehlers des Kontrollsystems (10) durch eine Erkennungsvorrichtung (92), wobei bei einem erkannten Betriebsfehler ein Zurücksetzen (224) des zumindest einen Offset-Werts (114) durch die Kontrollvorrichtung (40) und/oder die Erkennungsvorrichtung (92) erfolgt.

11. Kontrollsystem (10) zum Kontrollieren (206) einer Heizvorrichtung (100) für ein Bauwerk (170), das Kontrollsystem (10) aufweisend eine Ermittlungsvorrichtung (20), eine Erfassungsvorrichtung (30) und eine Kontrollvorrichtung (40),
**dadurch gekennzeichnet,**
**dass** das Kontrollsystem (10) zur Ausführung des Kontrollverfahrens (200) gemäß einem der vorangegangenen Ansprüche ausgestaltet ist.

12. Computerprogrammprodukt (300) zum Kontrollieren (206) einer Heizvorrichtung (100) für
ein Bauwerk (170) durch das Kontrollsystem (10),
**dadurch gekennzeichnet,**
**dass** das Computerprogrammprodukt (300) Befehle umfasst, die bewirken, dass das Kontrollsystem (10) gemäß Anspruch 11 die Verfahrensschritte nach einem der Ansprüche 1 bis 10 ausführt.

13. Computerlesbares Medium (400), auf dem das Computerprogrammprodukt (300) nach Anspruch 12 gespeichert ist.
